# EUROPÄISCHE PATENTANMELDUNG

(11) **EP 2 119 555 A1**
(43) Veröffentlichungstag der Anmeldung: **18.11.2009**
(21) Anmeldenummer: 09155444.4
(22) Anmeldetag: 18.03.2009
(51) Int. Cl.: B29D 30/30

(54) **Verfahren zur Herstellung von Fahrzeugreifen bei dem Materialstreifen aus einer Rohgummimischung auf eine Reifenaufbautrommel aufgespult werden**

(30) Priorität: 17.05.2008 DE 102008024110
(71) Anmelder: Continental Aktiengesellschaft, 30165 Hannover (DE)
(72) Erfinder: Geffert, Ulrich, 31848 Bad Münder (DE)
(74) Vertreter: Finger, Karsten

(57) **Zusammenfassung**

Die Erfindung betrifft ein Verfahren zur Herstellung von Fahrzeugreifen bei dem Materialstreifen aus einer Rohgummimischung auf eine Reifenaufbautrommel aufgespult werden.

Um ein Verfahren bereitzustellen, mit dem auf eine einfache Weise eine Qualitätsüberwachung der auf den Reifenrohling aufgespulten Materialstreifen möglich ist, wird folgendes Verfahren mit folgenden Schritten vorgeschlagen:
- Erzeugen eines Materialstreifens (6) aus einer Rohgummimischung mit einem Extruder,
- Weiterleitung des Materialstreifens zu einer Belegeinheit (5),
- Vermessung der Oberfläche der bereits auf der Reifenaufbautrommel (1) aufgebrachten Reifenaufbauteile mit einem Abtastsensor (7), der Höhenunterschiede auf der Außenseite Reifenaufbautrommel (1)vermisst,
- Aufspulen des Materialstreifens mit der Belegeinheit auf die bereits auf der Reifenaufbautrommel (1) aufliegenden Reifenaufbauteile,
- Vermessung der Oberfläche der auf die Reifenaufbautrommel (1) aufgespulten Materialstreifen (6) mit dem Abtastsensor (7),
- Ermittlung des auf die Reifenaufbautrommel (1) aufgespulten Materialvolumens und/oder der aufgespulten Materialverteilung durch Auswertung der durch den Abtastsensor (7) ermittelten Daten, wobei das ermittelte Materialvolumen für eine Qualitätsüberwachung des herzustellenden Fahrzeugreifens relevant ist, und
- Weiterverarbeitung und Fertigstellung des herzustellenden Fahrzeugreifens mit einem konventionellen Herstellungsverfahren.

## Beschreibung

Die Erfindung betrifft ein Verfahren zur Herstellung von Fahrzeugreifen bei dem Materialstreifen aus einer Rohgummimischung auf eine Reifenaufbautrommel aufgespult werden.

Bei einer Art der Herstellung von Fahrzeugreifen wird dieser so hergestellt, dass insbesondere der Laufstreifen in Form von schmalen Gummistreifen bzw. Materialstreifen auf den Reifenrohling, der sich auf einer Reifenaufbautrommel befindet, aufgespult wird. Die Gummistreifen, die aus einer Rohgummimischung bestehen, werden direkt vor dem Aufspulprozess mit einem Extruder erzeugt.
Dabei besteht ein Problem darin, dass eine messtechnische Erfassung zur Qualitätsüberwachung des aufgespulten Laufstreifens nicht ohne Weiteres möglich ist. Eine einfache Gewichtsmessung des Reifenrohlings lässt aus unterschiedlichen Gründen keine Aussage über das tatsächlich aufgespulte Materialvolumen zu. Das liegt u. a. daran, dass der Reifenunterbau, der u. a. die bereits aufgelegte Reifenkarkasse umfasst, unterschiedlichen Schwankungen unterliegt, die bei einer konventionellen Konturvermessung nicht erfasst würden. Das Aufspulen der schmalen Materialstreifen bzw. Gummistreifen an der Reifenaufbautrommel erfolgt in der Regel vollautomatisch. Nach Stillständen bei der Reifenherstellung oder nach längeren Spulzeiten kann es vorkommen, dass das aufgespulte Materialvolumen Schwankungen unterliegt. Derzeit ist kein Verfahren bekannt, mit dem diese Schwankungen des aufgespulten Materialvolumens kontrolliert werden können.

Der Erfindung lag die Aufgabe zugrunde, ein Verfahren bereitzustellen, mit dem auf eine einfache Weise eine Qualitätsüberwachung der auf den Reifenrohling aufgespulten Materialstreifen möglich ist.

Gelöst wird die Aufgabe durch ein Verfahren mit folgenden Schritten:
- Erzeugen eines Materialstreifens aus einer Rohgummimischung mit einem Extruder,
- Weiterleitung des Materialstreifens zu einer Belegeinheit,
- Vermessung der Oberfläche der bereits auf der Reifenaufbautrommel aufgebrachten Reifenaufbauteile mit einem Abtastsensor, der Höhenunterschiede auf der Außenseite Reifenaufbautrommel vermisst,
- Aufspulen des Materialstreifens mit der Belegeinheit auf die bereits auf der Reifenaufbautrommel aufliegenden Reifenaufbauteile,
- Vermessung der Oberfläche der auf die Reifenaufbautrommel aufgespulten Materialstreifen mit dem Abtastsensor,
- Ermittlung des auf die Reifenaufbautrommel aufgespulten Materialvolumens und/oder der aufgespulten Materialverteilung durch Auswertung der durch den Abtastsensor ermittelten Daten, wobei das ermittelte Materialvolumen für eine Qualitätsüberwachung des herzustellenden Fahrzeugreifens relevant ist, und
- Weiterverarbeitung und Fertigstellung des herzustellenden Fahrzeugreifens mit einem konventionellen Herstellungsverfahren.

Ein Vorteil der Erfindung ist insbesondere darin zu sehen, dass durch das erfindungsgemäße Verfahren das tatsächlich aufgespulte Materialvolumen auf eine einfache Weise überwacht wird. Die erfindungsgemäße Überwachung erfolgt insbesondere unabhängig von den Schwankungen des Reifenunterbaus, die beispielsweise auf die bereits aufgelegte Reifenkarkasse zurückzuführen sind. Durch das erfindungsgemäße Verfahren wird die endgültige Reifenrohlingskontur erfasst, die für einen optimalen Einform- und Vulkanisationsprozess erforderlich ist. Des Weiteren wird über das erfindungsgemäße Verfahren auch die Qualität des Reifenunterbaus überwacht, da der Abtastsensor bereits vor dem Aufspulprozess die Oberfläche des Reifenunterbaus abtastet und entsprechend auswertet.

In einer vorteilhaften Weiterbildung der Erfindung ist vorgesehen, dass das aufgespulte Materialvolumen und/ oder die aufgespulte Materialverteilung durch eine Subtraktion der ermittelten Konturlinien erfolgt, die vor und nach dem Aufspulprozess vorliegen. Auf diese Weise lässt sich das aufgespulte Materialvolumen einfach und mit einer hohen Präzision ermitteln.

In einer weiteren vorteilhaften Weiterbildung der Erfindung ist vorgesehen, dass der Abtastsensor ein optisch arbeitendes System ist. Optisch arbeitende Systeme tasten eine Oberfläche berührungslos ab und sind daher für das erfindungsgemäße Verfahren besonders vorteilhaft einsetzbar.

In einer weiteren vorteilhaften Weiterbildung der Erfindung ist vorgesehen, dass der Abtastsensor mit einem linienförmigen Lichtsignal die Oberfläche der Reifenaufbautrommel auf Höhenabweichungen abtastet, während die Reifenaufbautrommel um seine eigene Achse rotiert. Dadurch lässt sich die Oberfläche der auf der Reifenaufbautrommel aufliegenden Materialien mit einer hohen Geschwindigkeit abtasten.

In einer weiteren vorteilhaften Weiterbildung der Erfindung ist vorgesehen, dass der Abtastsensor mit dem linienförmigen Lichtsignal die Breitenausdehnung der Reifenaufbautrommel im Wesentlichen vollständig erfasst. Auf diese Weise kann die Oberfläche der auf der Reifenaufbautrommel aufliegenden Materialien mit nur einer Rotation der Reifenaufbautrommel vollständig erfasst werden.

In einer weiteren vorteilhaften Weiterbildung der Erfindung ist vorgesehen, dass der Abtastsensor ein optisch arbeitendes System mit einem Laser ist. Derartige Systeme mit einem Laser können die Oberfläche mit einer hohen Präzision abtasten.

In einer weiteren vorteilhaften Weiterbildung der Erfindung ist vorgesehen, dass der Abtastsensor an der Belegeinheit montiert ist. Dadurch wird der Abtastsensor mit der Belegeinheit immer in gleicher relativer Position zur Reifenaufbautrommel verfahren.

In einer weiteren vorteilhaften Weiterbildung der Erfindung ist vorgesehen, dass der Abtastsensor beim Aufspulen der Materialstreifen für die Seitenwände des Fahrzeugreifens mit der Belegeinheit seitlich zur Reifenaufbautrommel verfahren wird und in dieser Position die Oberfläche der Reifenaufbautrommel abtastet. Dadurch ist für die Qualitätsüberwachung der Seitenwand des Fahrzeugreifens kein zusätzlicher Abtastsensor erforderlich.

In einer weiteren vorteilhaften Weiterbildung der Erfindung ist vorgesehen, dass der Abtastsensor optional auf die Belegrolle der Belegeinheit gerichtet werden kann. Durch die Vermessung des Materialstreifens während des Aufspulprozesses direkt an der Belegeinheit können prozess- oder materialbedingte Schwankungen direkt erfasst werden. Des Weiteren werden mit einem solchen System ebenfalls Störungen in der Materialzufuhr einfach erkannt.

In einer weiteren vorteilhaften Weiterbildung der Erfindung ist vorgesehen, dass der Abtastsensor optional auf die Belegrolle der Belegeinheit gerichtet werden kann und dort die Oberfläche des Materialstreifens abtastet, der nachfolgend auf die Reifenaufbautrommel aufgespult wird. Da der Abtastsensor optional auf die Belegrolle der Belegeinheit gerichtet werden kann, ist kein zusätzlicher Abtastsensor erforderlich.

In einer weiteren vorteilhaften Weiterbildung der Erfindung ist vorgesehen, dass ein zweiter separater Abtastsensor auf die Belegrolle der Belegeinheit gerichtet ist und dort die Oberfläche des Materialstreifens abtastet, der nachfolgend auf die Reifenaufbautrommel aufgespult wird. Der Einsatz eines zweiten separaten Abtastsensors hat den Vorteil, dass dieser direkt auf die Breite des Materialstreifens abgestimmt werden kann.

In einer weiteren vorteilhaften Weiterbildung der Erfindung ist vorgesehen, dass eine Regelung der Synchronisation zwischen Reifenaufbautrommel und Belegrolle der Belegeinheit vorgesehen ist, die bei einem Verändern der Geometrie des auf die Reifenaufbautrommel aufzuspulenden Materialstreifens eingreift. Wird beispielsweise beim Aufspulen des Materialstreifens detektiert, dass dieser sich verkleinert hat, würde über eine Regelung der Synchronisation zwischen Reifenaufbautrommel und Belegrolle diesem Zustand entgegengesteuert werden.

### Anhand eines Ausführungsbeispiels soll die Erfindung näher erläutert werden. Es zeigen:

- Fig. 1:: ein Ausführungsbeispiel des erfindungsgemäßen Verfahrens
- Fig. 2:: eine Aufsicht auf das Verfahren bzw. die Vorrichtung in Figur 1.

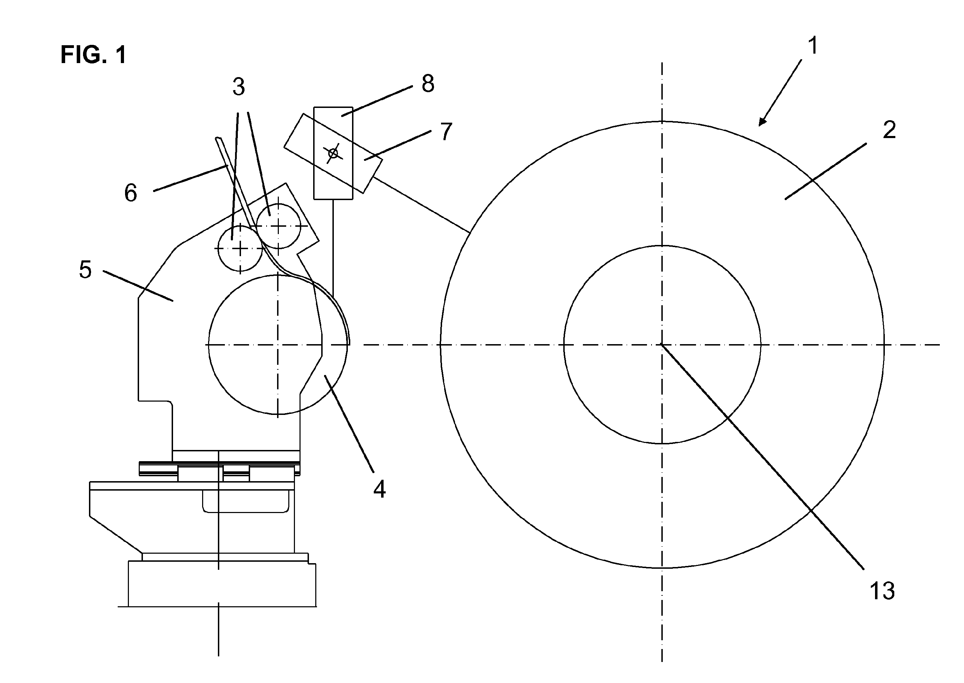

Die Figur 1 zeigt ein Ausführungsbeispiel des erfindungsgemäßen Verfahrens.
Die Vorrichtung für das Verfahren umfasst im Wesentlichen die Reifenaufbautrommel 1, die Belegeinheit 5 mit der Belegrolle 4 und dem Abtastsensor 7. Die Vorrichtung ist in einer Seitenansicht dargestellt. Auf der Reifenaufbautrommel 1 ist bereits der Reifenunterbau mit der Reifenkarkasse 2 aufgebracht worden. Die Belegeinheit 5 mit der Belegrolle 4 ist von der Reifenaufbautrommel 1 beabstandet, d. h. die Vorrichtung befindet sich in einem Zustand vor dem Aufspulprozess. Der Abtastsensor 7 steht in einer festen Verbindung mit der Belegeinheit 5 und ist auf die Oberfläche der Reifenaufbautrommel 1 gerichtet. Die Belegeinheit 5 ist dreidimensional in mehreren Achsen beweglich, wobei mit der Belegrolle 4 der Gummistreifen bzw. Materialstreifen 6 auf die Reifenaufbautrommel 1 aufgespult wird, auf der sich bereits ein entsprechender Reifenunterbau befindet. Für den Aufspulprozess wird die Belegrolle 4 mit der Belegeinheit 5 an die Reifenaufbautrommel 1 herangefahren. In der dargestellten Messposition des Abtastsensors 7 wird in einem ersten Verfahrensschritt die Oberfläche der Reifenaufbautrommel 1 abgetastet, auf der bereits der Reifenunterbau mit der Reifenkarkasse 2 aufgebracht wurde. Während des Abtastvorganges rotiert die Reifenaufbautrommel einmal um 360° um die Trommelachse 13. Bei diesem Vorgang werden die Höhenunterschiede auf der Außenseite der Reifenaufbautrommel präzise vermessen und in einem Datenspeicher abgelegt. In einem zweiten Verfahrensschritt erfolgt das Aufspulen des Materialstreifens bzw. Gummistreifens 6 mit der Belegeinheit 5, wobei der Laufstreifen vollständig auf den Reifenunterbau aufgespult wird. Anschließend erfolgt die Vermessung der Oberfläche der auf die Reifenaufbautrommel 1 aufgespulten Materialstreifen mit dem Abtastsensor 7, wobei die ermittelten Daten ebenfalls auf einem Datenspeicher abgespeichert werden. Als nächstes wird das auf den Reifenunterbau aufgespulte Materialvolumen über eine Rechenoperation ermittelt und mit einem entsprechenden Sollwert für eine Qualitätsüberwachung kontrolliert. Die Abtastfrequenz des Abtastsensors 7 liegt bei bis zu ca. 200 m/min, so dass auch bei hohen Beleggeschwindigkeiten eine ausreichende Auflösung möglich ist.

Bei einer ersten Ausführungsvariante kann der Abtastsensor 7 ebenfalls in eine zweite Messposition 8 gebracht werden. In dieser Messposition ist der Abtastsensor auf die Belegrolle 4 der Belegeinheit 5 gerichtet, wodurch die Streifengeometrie des Materialstreifens 6 beim Aufspulprozess überwacht werden kann. Bei Schwankungen der Geometrie des aufzuspulenden Materialstreifens 6 kann dann über einen Regelalgorithmus entgegengewirkt werden. Dieser Regelalgorithmus umfasst eine Synchronisation zwischen Reifenaufbautrommel 1 und Belegrolle 4 der Belegeinheit 5.

Bei einer zweiten Ausführungsvariante wird an der Belegeinheit 5 ein zweiter separater Abtastsensor 8 angeordnet, der ausschließlich auf die Belegrolle 4 gerichtet ist. Diese Ausführungsvariante hat den Vorteil, dass der entsprechende Abtastsensor gezielt auf die Streifengeometrie des Materialstreifens 6 abgestimmt werden kann.

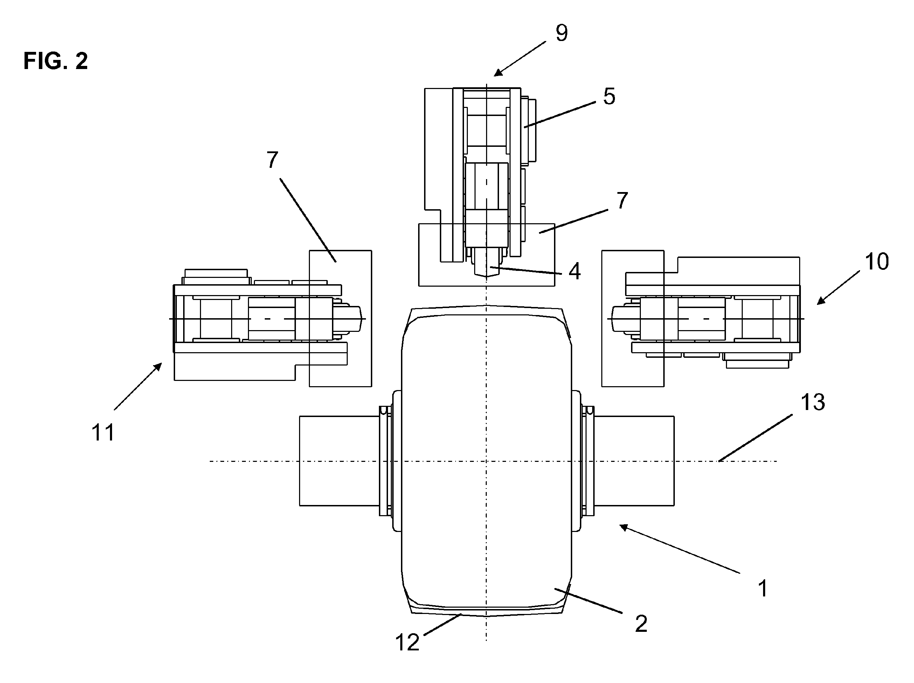

Fig. 2 zeigt die Vorrichtung für das erfindungsgemäße Verfahren in einer Aufsicht. In dieser Darstellung ist ein auf den Reifenunterbau aufgespulter Laufstreifen dargestellt. Die Belegeinheit 5 mit der Belegrolle 4 und der Abtastsensor 7 ist in der Figur in drei unterschiedlichen Positionen dargestellt. In der ersten Messposition 9, die ebenfalls die Anordnung in Figur 1 zeigt, ist der Abtastsensor 7 auf den Laufstreifen 12 gerichtet. Der Abtastsensor 7 erfasst den Laufstreifen 12 des Reifenrohlings mit einem linienförmigen Licht- bzw. Lasersignal in seiner gesamten Breitenausdehnung. Die Belegeinheit 5 mit dem Abtastsensor 7 kann ebenfalls in die Messposition 10 oder die Messposition 11 verfahren werden. In den Messpositionen 10 und 11 können die Reifenkonturen der Seitenwände des Reifenrohlings mit dem Abtastsensor 7 überwacht werden. Es werden Messungen vor und nach dem Spulprozess durchgeführt, so dass durch eine Subtraktion der Konturlinien das aufgespulte Materialvolumen und die entsprechende Materialvolumenverteilung bestimmt werden können.

### Bezugszeichenliste (ist Teil der Beschreibung)

- 1: Reifenaufbautrommel
- 2: Reifenkarkasse
- 3: Kalander-Rollenpaar
- 4: Streifenbelegrolle
- 5: Belegeinheit
- 6: Gummistreifen bzw. Materialstreifen
- 7: Abtastsensor
- 8: zweite Messposition des Abtastsensors 7
- 9: Messposition 1
- 10: Messposition 2
- 11: Messposition 3
- 12: aufgespulter Laufstreifen
- 13: Trommelachse

## Patentansprüche

1. Verfahren zur Herstellung von Fahrzeugreifen bei dem Materialstreifen (6) aus einer Rohgummimischung auf eine Reifenaufbautrommel (1) aufgespult werden, mit folgenden Schritten:
- Erzeugen eines Materialstreifens (6) aus einer Rohgummimischung mit einem Extruder,
- Weiterleitung des Materialstreifens zu einer Belegeinheit (5),
- Vermessung der Oberfläche der bereits auf der Reifenaufbautrommel (1) aufgebrachten Reifenaufbauteile mit einem Abtastsensor (7), der Höhenunterschiede auf der Außenseite Reifenaufbautrommel (1)vermisst,
- Aufspulen des Materialstreifens mit der Belegeinheit auf die bereits auf der Reifenaufbautrommel (1) aufliegenden Reifenaufbauteile,
- Vermessung der Oberfläche der auf die Reifenaufbautrommel (1) aufgespulten Materialstreifen (6) mit dem Abtastsensor (7),
- Ermittlung des auf die Reifenaufbautrommel (1) aufgespulten Materialvolumens und/oder der aufgespulten Materialverteilung durch Auswertung der durch den Abtastsensor (7) ermittelten Daten, wobei das ermittelte Materialvolumen für eine Qualitätsüberwachung des herzustellenden Fahrzeugreifens relevant ist, und
- Weiterverarbeitung und Fertigstellung des herzustellenden Fahrzeugreifens mit einem konventionellen Herstellungsverfahren.

2. Verfahren nach Anspruch 1,
**dadurch gekennzeichnet, dass**
das aufgespulte Materialvolumen und/ oder die aufgespulte Materialverteilung durch eine Subtraktion der ermittelten Konturlinien erfolgt, die vor und nach dem Aufspulprozess vorliegen.

3. Verfahren nach Anspruch 1 oder 2,
**dadurch gekennzeichnet, dass**
der Abtastsensor (7) ein optisch arbeitendes System ist.

4. Verfahren nach einem der vorhergehenden Ansprüche,
**dadurch gekennzeichnet, dass**
der Abtastsensor (7) mit einem linienförmigen Lichtsignal die Oberfläche der Reifenaufbautrommel (1) auf Höhenabweichungen abtastet, während die Reifenaufbautrommel (1) um seine eigene Achse (13) rotiert.

5. Verfahren nach einem der vorhergehenden Ansprüche,
**dadurch gekennzeichnet, dass**
der Abtastsensor (7) mit dem linienförmigen Lichtsignal die Breitenausdehnung der Reifenaufbautrommel (1) im Wesentlichen vollständig erfasst.

6. Verfahren nach einem der vorhergehenden Ansprüche,
**dadurch gekennzeichnet, dass**
der Abtastsensor (7) ein optisch arbeitendes System mit einem Laser ist.

7. Verfahren nach einem der vorhergehenden Ansprüche,
**dadurch gekennzeichnet, dass**
der Abtastsensor (7) an der Belegeinheit (5) montiert ist.

8. Verfahren nach einem der vorhergehenden Ansprüche,
**dadurch gekennzeichnet, dass**
der Abtastsensor (7) beim Aufspulen der Materialstreifen (6) für die Seitenwände des Fahrzeugreifens mit der Belegeinheit (5) seitlich zur Reifenaufbautrommel (1) verfahren wird und in dieser Position die Oberfläche der Reifenaufbautrommel (1) abtastet.

9. Verfahren nach einem der vorhergehenden Ansprüche,
**dadurch gekennzeichnet, dass**
der Abtastsensor (7) optional auf die Belegrolle (4) der Belegeinheit (5) gerichtet werden kann.

10. Verfahren nach einem der vorhergehenden Ansprüche,
**dadurch gekennzeichnet, dass**
der Abtastsensor (7) optional auf die Belegrolle (4) der Belegeinheit (5) gerichtet werden kann und dort die Oberfläche des Materialstreifens (6) abtastet, der nachfolgend auf die Reifenaufbautrommel (1) aufgespult wird.

11. Verfahren nach einem der vorhergehenden Ansprüche,
**dadurch gekennzeichnet, dass**
ein zweiter separater Abtastsensor auf die Belegrolle (4) der Belegeinheit (5) gerichtet ist und dort die Oberfläche des Materialstreifens (6) abtastet, der nachfolgend auf die Reifenaufbautrommel (1) aufgespult wird.

12. Verfahren nach einem der vorhergehenden Ansprüche,
**dadurch gekennzeichnet, dass**
eine Regelung der Synchronisation zwischen Reifenaufbautrommel und Belegrolle der Belegeinheit (5) vorgesehen ist, die bei einem Verändern der Geometrie des auf die Reifenaufbautrommel (1) aufzuspulenden Materialstreifens (6) eingreift.

13. Vorrichtung zur Herstellung von Fahrzeugreifen, wobei der Fahrzeugreifen mit einem Verfahren nach Anspruch 1 hergestellt wird.
